# EUROPÄISCHE PATENTSCHRIFT

(11) **EP 3 141 371 B1**
(45) Veröffentlichungstag und Bekanntmachung des Hinweises auf die Patenterteilung: **19.06.2019**
(21) Anmeldenummer: 16188429.1
(22) Anmeldetag: 12.09.2016
(51) Int. Cl.: B29C 48/25, B29C 48/285, B29C 48/92, B29B 7/60, B29C 31/10

(54) **ANLAGE ZUM BESCHICKEN EINES EXTRUDERS UND VERFAHREN ZU IHREM BETRIEB**
PLANT FOR THE FEEDING OF AN EXTRUDER AND METHOD FOR USING IT
INSTALLATION DE CHARGEMENT D'UNE EXTRUDEUSE ET PROCÉDÉ DE SON UTILISAGE

(30) Priorität: 11.09.2015 DE 102015011643
(43) Veröffentlichungstag der Anmeldung: 15.03.2017
(73) Patentinhaber: x-per Extruder Performance GmbH, 50181 Bedburg (DE)
(72) Erfinder: Schramm, Jens, 19057 Schwerin (DE)
(74) Vertreter: Grosse, Felix Christopher

(56) Entgegenhaltungen:
- EP-A2- 0 318 170
- WO-A1-2015/028150
- WO-A1-2015/040765
- DE-A1- 2 406 686
- DE-A1- 4 214 081
- JP-A- H 081 749
- JP-A- H04 175 119
- JP-A- 2001 179 778

## Beschreibung

Die vorliegende Erfindung betrifft eine Anlage zum Beschicken eines Extruders, die eine erste Fördereinrichtung und mindestens eine weitere Fördereinrichtung umfasst, die jeweils zumindest abschnittsweise flexible Rohstoffleitungen und Auslässe zum Fördern von Rohstoffen in einem dem Extruder vorgeschalteten Mischbehälter ausbilden. Ferner betrifft die Erfindung ein Verfahren zum Betrieb eines Extruders unter Verwendung einer Anlage zum Beschicken eines Extruders.

Bekannte Anlagen zum Beschicken eines Extruders sind beispielsweise aus der JP H08 1749 A, der EP 0 318 170 A2, der JP H04 175119 A, und JP 2001 179778 A bekannt. Während sich die JP H08 1749 A damit beschäftigt, ein Zuführsystem für einen Kunststoffextruder zu beschreiben, mit welchem auch kurze vielfarbige Produkte gleichförmig hergestellt werden können, liegt der Fokus der EP 0 318 170 A2 auf einer effizienten Reinigung der offenbarten Zuführanlage für pulverisierte oder als Granulat vorliegende Stoffe über Reinigungsdüsen. Die JP H04 175119 A beschäftigt sich insbesondere mit dem Problem von Kunstharz, welches an Innenwänden entsprechender Bauteile anhaftet und der Vermeidung desselben. Die JP 2001 179778 A zielt auf eine Effizienzverbesserung eines Wechselprozesses von Material, welches dem Extruder zugeführt werden soll, ab. Schließlich beschreibt auch die WO 2015 040 765 A1 eine Vorrichtung zum Beschicken eines Extruders zur Herstellung eines polymeren Kompositmaterials und die WO 2015 028 150 A1 eine Dosiervorrichtung, die einfach an unterschiedliche geometrische Gegebenheiten angepasst werden kann. Aus dem Stand der Technik sind demnach vielfältige Ansatzpunkte zur Lösung spezifischer Problemstellungen bei der Kunststoffverarbeitung bekannt, wobei sich auch die vorliegende Erfindung der Lösung einer solchen widmet.

In der Kunststoffindustrie befindet sich heutzutage auf jedem Extruder eine Dosierstation mit Saugförderung. Dies gilt sowohl für Monoanlagen, als auch Mehrschichtanlagen, sowohl für Blasfolienanlagen als auch andere kunststoffformgebende Anlagen, und sowohl für eine Mischkomponente als auch mehrere Komponenten, als Zuschlagstoffe zur Dosierung. Über geeignete Sensoren an den Dosier- und Liegestationen, werden die Extruderantriebe und Anlagenregelungen mit Informationen versorgt, um die Extruderdrehzahl zu regeln und den Ausstoß auf den gewünschten Durchsatz zu bringen.

Bei kontinuierlich arbeitenden Anlagen müssen bei jeder Anlagenumstellung zwischen Beendigung eines Produktionsauftrages und Beginn eines neuen Produktionsauftrages die Rohstoffe ganz oder teilweise aus den Saugfördergeräten und Dosierbehältern abgelassen und die neuen Rohstoffe geladen werden. Dies dauert bei einer Dreischichtanlage bis zu einer Stunde. Der Bediener hat keine Möglichkeit, die Rohstoffe vorher zu laden und der Maschine zuzuführen. Während der Umstellung fällt je nach Anlagenkonfiguration bis zu 750 kg Abfall an und man verliert effektive Produktionszeit.

Neben den beschriebenen Zeitverlusten entsteht bei herkömmlichen Anlagenumstellungen zudem ein hoher Arbeitsaufwand. Dies wird anhand des Beispiels einer Blasfolienanlage erkennbar, bei der ein kontinuierlicher Folienschlauch aus einer extrudierten Kunststoffschmelze extrudiert wird. Dieses Verfahren läuft erst nach einer gewissen Anfahrzeit stabil, da der Folienschlauch nach dem Extruder speziell abgekühlt und aufgewickelt werden muss. Eine Unterbrechung der Extrusion bedeutet, dass der Folienschlauch abgetrennt und beim Anfahren wieder aufwändig von einem erfahrenen Bediener der Anlage eingefädelt werden muss. Bislang fällt dieser Arbeitsvorgang jedes Mal an, wenn die Anlage zur Beschickung des Extruders gereinigt, gewartet oder neu befüllt werden muss. Die Reinigung und die neue Befüllung sind insbesondere immer dann vonnöten, wenn eine neue Kunststoffzusammensetzung in den Extruder einzubringen ist. Jede Anlagenumstellung bei einer herkömmlichen Blasfolienanlage von einem Kunststoffgemisch zu einem anderen Kunststoffgemisch erfordert bislang die Unterbrechung der Folienschlauchproduktion und nach Reinigung und Entleerung sämtlicher Anlagenbehälter das Anfahren eines neuen Folienschlauchs. Das erneute Anfahren nach einer Unterbrechung der Schlauchproduktion ist deutlich teurer, als das temporäre Produzieren eines Schlauchs aus einem nicht brauchbaren Übergangsgemisch.

Es ist also eine Aufgabe der Erfindung, eine Anlage zum Beschicken eines Extruders bereitzustellen, mit der ohne signifikanten Produktionszeitverlust von einem Produktionsauftrag für ein Kunststofferzeugnis zu einem anderen Produktionsauftrag für ein anderes Kunststofferzeugnis gewechselt werden kann.

Diese Aufgabe wird durch eine Anlage mit den Merkmalen des Patentanspruchs 1 gelöst, wobei die Anlage eine erste Fördereinrichtung und mindestens eine weitere Fördereinrichtung umfasst, die jeweils zumindest abschnittsweise flexible Rohstoffleitungen und Auslässe zum Fördern von Rohstoffen in einen dem Extruder vorgeschalteten Mischbehälter ausbilden, und jede Fördereinrichtung ausgestaltet ist, den Mischbehälter mit einer spezifischen Rohstoffkombination und Rohstoff- Mengenverhältnis zu beschicken. Die Beschickung des Mischbehälters umfasst im Sinne der Erfindung die Beschickung einer Rohstoffwaage, die dem Mischbehälter vorgeschaltet ist. Dies ist allerdings optional und nicht zwingend notwendig.

Der Begriff Rohstoff bezieht sich im Sinne der Anmeldung auf eine Ausgangskomponente des im Mischbehälter zu erzielenden Kunststoffgemisches für einen Produktionsauftrag. Üblicherweise besteht eine derartige Kunststoffmischung aus einer oder mehreren Hauptkomponenten sowie einer oder mehreren Nebenkomponenten, wobei eine oder mehrere der dazugehörigen Nebenkomponenten gleich oder verschieden sein können. Üblicherweise liegen die Haupt- und/oder Nebenkomponenten als Kunststoffgranulatmischung, als Pulver oder ganz allgemein in Partikelform vor.

Die erfindungsgemäße Anlage zeichnet sich also dadurch aus, dass jede Fördereinrichtung so ausgestaltet ist, dass diese den Mischbehälter mit einer spezifischen Rohstoffkombination beschickt.

Das Vorsehen eigener Fördereinrichtungen für jede spezifische Rohstoffkombination beruht auf der Erkenntnis, dass schlagartig von einer Rohstoffkombination auf die andere Rohstoffkombination umgeschaltet werden kann, ohne dass Reinigungsvorgänge einer Fördereinrichtung sich auf den Betrieb der Anlage auswirken. Dadurch, dass eine neu hinzugeschaltete Fördereinrichtung gar nicht erst in Kontakt mit einer anderen Rohstoffkombination in Verbindung kam, können Restbestandteile einer vorherigen Mischung in der Fördereinrichtung gänzlich ausgeschlossen werden. Während nun die neu ausgewählte Fördereinrichtung in Betrieb ist, kann parallel die vorherig in Betrieb befindliche Fördereinrichtung gereinigt werden. Insbesondere können die in den inaktiven Rohstoffleitungen vorhandenen Rohstoffe sortenrein zurückgeführt werden, wodurch Kosten und Abfall eingespart werden.

Im Ergebnis kann eine Unterbrechung der Extruderbeschickung vollständig vermieden werden, da schlicht von einer Fördereinrichtung in eine weitere Fördereinrichtung umgeschaltet werden kann. Hier ist lediglich darauf zu achten, dass im Mischbehälter eine temporäre Mixtur aus der Rohstoffkombination der ersten Fördereinrichtung und der Rohstoffkombination der weiteren Fördereinrichtung entsteht. Es wird sich also eine gewisse Zeit lang ein Übergang aus einer ersten Rohstoffkombination und einer weiteren Rohstoffkombination im Mischbehälter befinden; allerdings wird der Extrusionsprozess selbst nicht unterbrochen. Durch eine geschickte An- bzw. Abschaltung der einzelnen Fördereinrichtungen kann die Übergangsmischung im Mischbehälter auf ein Mindestmaß reduziert werden.

Dabei sind die Auslässe der Fördereinrichtungen derart in eine Förderposition verschiebbar, dass stets genau eine Fördereinrichtung den Mischbehälter mit Rohstoffen beschicken kann. Unter Förderposition wird in diesem Zusammenhang im Grunde eine Position oberhalb des Mischbehälters oder einer vorgeschalteten Komponente des Mischbehälters gemeint. Entscheidend ist, dass wenn ein Auslass in einer Förderposition ist, die Fördereinrichtung des betreffenden Auslasses prinzipiell in der Lage ist, den Mischbehälter oder eine vorgeschaltete Komponente des Mischbehälters mit Rohstoff zu beschicken. Eine derartige vorgeschaltete Komponente ist beispielsweise eine Rohstoffwaage.

Dadurch, dass durch die Positionierung der Auslässe stets genau eine Fördereinrichtung den Mischbehälter mit Rohstoffen beschicken kann, werden versehentliche Mehrfachbeschickungen oder Fehlbeschickungen des Mischbehälters mittelbar ausgeschlossen. Ferner ist es sinnvoll, wenn die Auslässe von inaktiven Fördereinrichtungen nicht in der Förderposition sind, da diese gereinigt werden können ohne dass der Auslass der zu reinigenden Fördereinrichtung in einer Förderposition ist. Folglich kann die eine oder mehrere nicht aktiven Fördereinrichtungen gänzlich unabhängig vom Anlagenbetrieb gewartet, gereinigt oder inspiziert werden.

Die Auslässe der Fördereinrichtungen sind erfindungsgemäß auf einer gemeinsamen Verschiebevorrichtung angeordnet. Der Begriff Verschiebevorrichtung umfasst im Sinne der Erfindung eine beliebig geartete Vorrichtung, die geeignet ist, die Auslässe der Fördereinrichtungen zu verschieben oder zu bewegen. Denkbar ist bspw. eine Führungsschiene, auf der die Auslässe der Fördereinrichtungen geführt werden. Alternativ ist es auch denkbar, die Auslässe der Fördereinrichtung auf einer Drehscheibe zu positionieren, auf der diese in verschiedene Positionen rotierend bewegt werden können. Dabei sind sowohl Verschiebevorrichtungen umfasst, die eine Relativbewegung zwischen den einzelnen Auslässen der Fördereinrichtungen erlauben, als auch Verschiebevorrichtungen, an denen die Auslässe der Fördereinrichtungen starr befestigt sind.

Vorteilhaft bei der Verwendung einer derartigen Verschiebevorrichtung ist die Möglichkeit, die Auslässe der einzelnen Fördereinrichtungen einfach, eindeutig und zügig in eine gewünschte Position zu bringen.

Gemäß einer Ausführungsform in Verbindung mit der zuvor genannten Positionierung der Auslässe einer Fördereinrichtung in einer Förderposition ist es dabei besonders vorteilhaft, wenn mittels einer gemeinsamen Verschiebevorrichtung diese Förderposition durch bestimmte Stellungen der einzelnen Auslässe vorbestimmt sind. Bspw. könnten auf einer Drehscheibe die Auslässe einer Fördereinrichtung in einer vorbestimmten Region auf der Drehscheibe positioniert werden und durch ein Verdrehen der Drehscheibe die auszuwählenden Auslässe in eine Förderposition gebracht bzw. aus einer Förderposition entfernt werden. Gleichwohl ist denkbar, anstelle der Drehscheibe bspw. einen Förderschlitten zu verwenden. Jedoch sind auch andere, dem Fachmann bekannten Verschiebevorrichtungen denkbar, die den o.g. Zweck erfüllen.

Zweckmäßigerweise bezieht jede Fördereinrichtung die zu fördernden Rohstoffe aus einem eigenen Rohstoffreservoir. Mit dem Begriff Rohstoffreservoir ist ganz allgemein eine Quelle gemeint, die einen zu fördernden Rohstoff bereitstellt. Bspw. kann ein Rohstoffreservoir eine Vorratskammer darstellen oder einen handelsüblichen Vorratsbehälter für Kunststoffgranulat, der die einzelnen zu fördernden Komponenten separat bevorratet bereitstellt.

Vorteilhaft bei dieser Ausführungsform ist die Möglichkeit, eine Fördereinrichtung speziell auf das zu fördernde Gemisch abzustimmen, wodurch eine Fehlbedienung weitestgehend ausgeschlossen werden kann. Auch ist es möglich, zwei identische Fördereinrichtungen an zwei identische Rohstoffreservoirs anzubinden, um schlicht ein redundantes System vorrätig zu haben.

Zweckmäßigerweise weist jede Fördereinrichtung eine Mehrzahl von Rohstoffleitungen, vorzugsweise vier oder sechs Rohstoffleitungen auf, denen jeweils ein Rohstoff oder Rohstoffmix zugeordnet ist. Üblicherweise bestehen die im Mischbehälter des Extruders bereitzustellenden Mischungen aus vier oder sechs Einzelkomponenten, umfassend Haupt- und/oder Nebenkomponenten, die jeweils als einzelner Rohstoff vorrätig sind. Da diese aus unterschiedlichen Behältern heraus gefördert werden müssen, ist es zweckmäßig, für jeden dieser Rohstoffe eine separate Rohstoffleitung vorzusehen. Auch kann es zweckmäßig sein, die einzeln geförderten Rohstoffe in der Mischkammer zunächst separat zu akkumulieren und erst dann diese der Mischkammer zuzuführen. Auch andere Anzahlen von Einzelkomponenten sind im Sinne der Erfindung denkbar.

Weiterhin ist es vorteilhaft, wenn die Auslässe einer Fördereinrichtung auf einer Auslassplatte gebündelt werden. Durch das Vorhandensein einer derartigen Auslassplatte können die Auslässe einer zugehörigen Fördereinrichtung bequem gemeinsam positioniert, bewegt und geregelt werden. Erfindungsgemäß weist die Auslassplatte mehrere Aussparungen auf, die zur Aufnahme der einzelnen Auslässe einer zugeordneten Fördereinrichtung dienen. Dies hat insbesondere den Vorteil, dass die einzelnen Auslässe an definierten Positionen den in jedem einzelnen Auslass geförderten Rohstoff in den Mischbehälter eingeben.

Gemäß einer Ausführungsform weist die Auslassplatte sechs Aussparungen auf, die zur Aufnahme von Rohstoffleitungen mit einem Innendurchmesser von etwa 100 mm dienen, wobei die einzelnen Aussparungen in einem Abstand von etwa 200 mm voneinander auf der Auslassplatte beabstandet sind. Weiterbildend ist es vorteilhaft, wenn die Auslassplatten der Fördereinrichtungen im Wesentlichen identisch sind. Die identische Ausgestaltung der einzelnen Auslassplatten hat den Vorteil, dass der Mischbehälter bzw. der dem Mischbehälter vorgeschaltete Komponenten stets ähnlich beschickt werden, wodurch ebenfalls ein stets ähnlicher Rohstofffluss durch die Anlage gewährleistet werden kann. Dabei können gemäß einer speziellen Ausführungsform die einzelnen Rohstoffe je nach Verwendung in unterschiedlich dicken Rohstoffleitungen gefördert werden. Hierzu ist angedacht, Hauptkomponenten in größeren und Nebenkomponenten in kleineren Rohstoffleitungen zu fördern. Ganz allgemein können demnach Auslässe von Rohstoffleitungen von Nebenkomponenten kleiner sein als Rohstoffleitungen von Hauptkomponenten. Dies hängt im Wesentlichen von der Konfiguration der Anlage oder der Dosierung ab. Beispielsweise in Abhängigkeit davon, welche Komponente in einer Konzentration von z.B. 0 bis 5 % dosiert werden soll und welche in einer Konzentration von 20 bis annähernd 100 %. Die Komponente bis annähernd 100 % wird demnach einen größeren Auslass zur Rohstoffwaage hin ausbilden.

Weiterbildend ist es vorteilhaft, wenn die Anlage eine zusätzliche Steuer- oder Regelvorrichtung aufweist, die stromaufwärts des Mischbehälters angeordnet ist. Stromaufwärts bezieht sich hierbei auf den Rohstofffluss. Gemeint ist jede Position in einem Partikelstrom stromaufwärts des Mischbehälters.

Mit Hilfe einer erfindungsgemäßen Steuer- oder Regelvorrichtung soll eine Möglichkeit geschaffen werden, den von einer Fördereinrichtung geförderten Rohstoffstrom vor der Zufuhr in den Mischbehälter zu überprüfen, zu messen und/oder zu beeinflussen. Dies kann sowohl für den gesamten geförderten Rohstoffstrom aus der Fördereinrichtung gelten oder für die einzelnen, von der Fördereinrichtung geförderten Komponenten. Dies kann sowohl in einem gemischten oder noch unvermischten Zustand der von einer Fördereinrichtung zu fördernden Rohstoffe erfolgen.

Weiterbildend ist es vorteilhaft, wenn die Steuer- oder Regelvorrichtung mindestens eine Rohstoffwaage mit einer Kippfunktion umfasst, wobei die Rohstoffwaage nach Beladung mit einer vorbestimmten Masse an Rohstoffen diese in den Mischbehälter kippt. Die Rohstoffwaage erlaubt somit einen Rückschluss über die tatsächlich dem Mischbehälter zugeführte Masse an Rohstoffen. Dadurch kann gewährleistet werden, dass eine zeitlich veränderliche Fördermenge der Fördereinrichtung nicht zu einer Fehlbeschickung des Mischbehälters führt. Auch können Informationen aus der Rohstoffwaage zur Steuerung und Regelung der Anlage verwendet werden.

Weiterbildend ist es vorteilhaft, wenn Fördereinrichtungen pneumatisch betrieben werden. Ein pneumatischer Antrieb ermöglicht es, die zu fördernden Rohstoffe aus einem vorgesehenen Reservoir zu saugen und an die vorgesehene Stelle zu befördern. Derartige Saugvorrichtungen sind kostengünstig und wartungsfrei. Dabei kann sowohl eine zentrale, allen Fördereinrichtungen zugeordnete Saugvorrichtung vorhanden sein oder für jede Fördereinrichtung eine separate Saugvorrichtung ausgebildet sein. Im Falle einer allen Fördereinrichtungen gemeinsamen pneumatischen Saugvorrichtung ist es vorzugsweise möglich, eine oder mehrere Fördereinrichtungen der Saugvorrichtung zuzuschalten, oder von dieser zu entkoppeln.

Weiterbildend ist es vorteilhaft, wenn eine Fördereinrichtung mindestens eine Absperrvorrichtung aufweist, die konfiguriert sind, einen Rohstofffluss durch die Auslässe der zugeordneten Fördereinrichtung zuzulassen oder zu unterbinden. Die Absperrvorrichtung kann sowohl manuell, automatisch oder von einer Regelung betätigt werden.

Weiterbildend ist es vorteilhaft, wenn die Anlage eine Regelung aufweist, die konfiguriert ist, einen oder mehrere der Komponenten Rohstoffwaage, Absperrvorrichtung, Mischbehälter, Extruder in Abhängigkeit der aktiven Fördereinrichtung zu regeln. Vorteilhafterweise sind hierfür spezielle Betriebsparameter für die genannten Komponenten in der Regelung hinterlegt, die in Abhängigkeit von der aktiven Fördereinrichtung, also in Abhängigkeit der zu Fördernden Rohstoffrezeptur, an die besagten Komponenten der Anlage übergeben werden. Neben Stellgrößen sind hierfür insbesondere folgende Betriebsparameter relevant: Füllstand im Mischbehälter, kritisches Rohstoffgewicht auf der Waage, Drehzahl des Mischbehälters, Betriebstemperatur und dergleichen. Beispielsweise weist der Mischbehälter einen Füllstandsensor auf. Im Falle eines Umschaltvorgangs registriert die Regelung eine neue Auslassplatte in der Förderposition und übergibt nun die entsprechend hinterlegten Betriebs- und Stelldaten an die Anlagenkomponenten. Die Regelung wartet nun ab, bis der Mischbehälter weitestgehend leergelaufen ist, bevor die Verriegelungsvorrichtung geöffnet und die Förderung beginnt. Die Rohstoffwaage kippt nun bei einer ggf. entsprechend geänderten kritischen Rohstoffbeladung den auf der Rohstoffwaage befindlichen Rohstoff in den Mischbehälter. Dieser mischt bei ggf. geänderter Drehzahl und führ die Mischung dem Extruder zu, der ggf. bei einer geänderten Betriebstemperatur extrudiert.

Weiterhin ist es vorteilhaft, wenn die Regelung ein Bedienfeld aufweist, das die Zustände (aktiv/inaktiv) der vorhandenen Fördereinrichtungen abbildet und/oder Eingaben von Betriebsparametern und Stellgrößen zum Regel der Anlage erlaubt. Beispiele für Betriebsparameter sind insbesondere Mindestfüllstand im Mischbehälter, kritisches Rohstoffgewicht auf der Waage, Drehzahl des Mischbehälters, Betriebstemperatur des Extruders und dergleichen. Stellgrößen sind insbesondere Auf/Zu-Positionen der Absperrvorrichtungen, Blendenöffnung des Extruders und dergleichen.

Die Lösung der Aufgabe gelingt ferner mit einem Verfahren zur Beschickung eines Extruders unter Verwendung einer erfindungsgemäßen Anlage. Damit gelingt es, erfindungsgemäß auf besonders effiziente Art eine Anlageumschaltung von einer Komponentenmischung auf eine weitere Komponentenmischung zu realisieren. Das erfindungsgemäße Verfahren umfasst dabei die Schritte, positionieren von Auslässen einer ersten Fördereinrichtung in einer Förderposition; Aktivieren der Fördereinheit, deren Auslässe sich in der Förderposition befinden; Deaktivieren der ersten Fördereinheit; Verschieben der Auslässe der ersten Fördereinrichtung aus der Förderposition und Verschieben der Auslässe einer weiteren Fördereinrichtung in die Förderposition; und Aktivieren der weiteren Fördereinheit. Durch dieses Verfahren wird gewährleistet, dass stets genau eine Fördereinheit, nämlich genau die Fördereinheit, deren Auslässe sich in einer Förderposition befinden, Rohstoffe befördert. Dadurch wird das Risiko einer Fehlbedienung der Anlage auf ein Mindestmaß reduziert. Gleichermaßen ist gewährleistet, dass ein schneller Wechsel von der ersten Fördereinrichtung zu der zweiten Fördereinrichtung vollzogen werden kann, da der Wechsel inklusive Ein- und Ausschaltvorgänge deutlich kürzer ist, als die Zeitspanne, während der Mischbehälter leerlaufen würde. Folglich befindet sich im Mischbehälter stets ausreichend Material zum Beschicken des Extruders. Im Falle einer Blasfolienanlage kann somit ein kontinuierlicher Folienschlauch erzeugt werden, wobei die Folie aus einer Rohstoffzusammensetzung in eine andere Rohstoffzusammensetzung übergeht. Aktivieren bedeutet nicht zwangsläufig Veranlassen der Förderung. Letzteres kann durch Absperrvorrichtungen erzielt werden.

Weiterbildend erfolgt das Deaktivieren der ersten und/oder der weiteren Fördereinrichtung automatisch mit der Verschiebung der jeweils zugeordneten Auslässe aus der Förderposition heraus. Durch diese mittelbare Sicherheitsvorkehrung kann gewährleistet werden, dass unter keinen Umständen ein Verschütten von Rohstoffkomponenten in Form einer Förderung derselben in die Umgebung der Anlage erfolgt. Auch ist dadurch ein Arbeitsschritt weniger von Nöten, was die Anlage insgesamt einfacher zu bedienen macht.

Weiterbildend erfolgt das Umschalten der ersten und/oder der weiteren Fördereinrichtung automatisch mit der Verschiebung der jeweils zugeordneten Auslässe in die Förderposition hinein. Dieser automatische Schritt hat den Vorteil, dass der Bediener der Anlage während des Umschaltvorgangs nicht selbstständig die Fördereinrichtung aktivieren, und anschließend die Förderung von Rohstoffen initiieren muss. Dadurch wird die Anlage leichter zu bedienen. Die Aktivierung bzw. Deaktivierung der betreffenden Fördereinrichtung wird in diesem Falle über eine Absperrvorrichtung vorgenommen, die von einer Regelung angesteuert wird. Die Aktivierung bzw. Deaktivierung der Fördereinrichtung ist nicht zwingend gleichzusetzen mit Förderung. Die Förderung selbst kann über eine oder mehrere Absperrvorrichtungen erzielt werden, die in den Rohstoffleitungen der Anlage vorhanden sind. Die Position der Absperrvorrichtungen können entweder manuell, automatisch an eine Position, insbesondere Förderposition, und/oder über eine Regelung gesteuert werden.

In einer speziellen Ausführungsform wird sowohl das Deaktivieren der ersten und der weiteren Fördereinrichtung als auch das Aktivieren der ersten und/oder der weiteren Fördereinrichtung durch die zuvor beschriebenen Verschiebungsvorgänge der jeweils zugeordneten Auslässe in die Förderposition hinein oder aus der Förderposition heraus veranlasst. Dies hat den Vorteil, dass zum Bedienen der Anlage und insbesondere die Bedienung der Anlage während des Umschaltvorgangs durch einen einzigen Handgriff bzw. einer einzigen Handlung die zum Verschieben der jeweiligen Auslässe führt, erfolgen kann. Im Ergebnis kann die Anlage selbst während eines Umschaltvorgangs mit vernachlässigbarem Zeitaufwand von einer Person bedient werden. Die Aktivierung bzw. Deaktivierung der Fördereinrichtung ist nicht zwingend gleichzusetzen mit Förderung. Die Förderung selbst kann über eine oder mehrere Absperrvorrichtungen erzielt werden, die in den Rohstoffleitungen der Anlage vorhanden sind.

Nachfolgend wird die Erfindung anhand mehrerer in den Zeichnungen dargestellten Ausführungsbeispielen näher erläutert. Darin zeigen schematisch:
- Fig. 1:: eine schematisch vereinfacht dargestellte Gesamtansicht einer Anlage zum Beschicken eines Extruders;
- Fig. 2:: eine perspektivische Teilansicht der in Fig. 1 gezeigten Anlage;
- Fig. 3:: eine schematisch vereinfacht dargestellte Teilansicht einer zweiten Ausführungsform; und
- Fig. 4:: eine schematisch vereinfacht dargestellte Teilansicht einer dritten Ausführungsform.

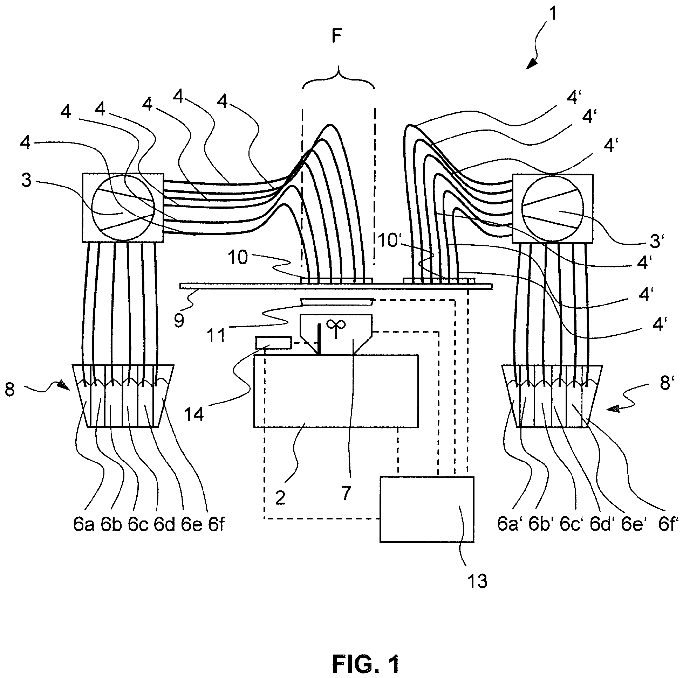

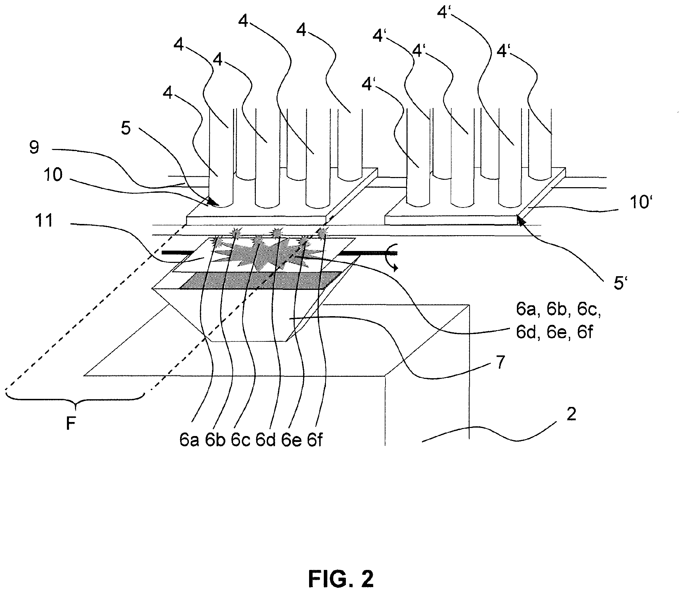

Die in Fig. 1 und Fig. 2 gezeigte Anlage 1 zur Beschickung eines Extruders 2 weist zwei Fördereinrichtungen 3 und 3' auf. Diese sind im gezeigten Fall pneumatische Saugfördereinrichtungen, die im Wesentlichen den Extruder 2 über jeweils sechs flexible Rohstoffleitungen 4 bzw. 4'und den Rohstoffleitungen zugeordneten Auslässen 5 bzw. 5' mit Rohstoffen 6a, 6b, 6c, 6d, 6e und 6f bzw. 6a', 6b', 6c', 6d', 6e' und 6f' beschicken. Wie in Fig. 1 dargestellt, ist dabei jeder Rohstoffleitung 4, 4' ein bestimmter Rohstoff 6a, 6b, 6c, 6d, 6e und 6f bzw. 6a', 6b', 6c', 6d', 6e' und 6f' zugeordnet. Alle von einer Fördereinrichtung 3, 3' geförderten Rohstoffe 6a, 6b, 6c, 6d, 6e und 6f bzw. 6a', 6b', 6c', 6d', 6e' und 6f' werden in einen Mischbehälter 7 gefördert, wobei jede Fördereinrichtung 3, 3' ihre zu fördernden Rohstoffe 6a, 6b, 6c, 6d, 6e und 6f bzw. 6a', 6b', 6c', 6d', 6e' und 6f' aus einem eigenen Rohstoffreservoir 8, 8' bezieht. Daraus geht hervor, dass der eine zentrale Mischbehälter 7 von zwei eigenständigen Versorgungseinheiten, nämlich jeweils einer Fördereinrichtung 3, 3' mit dazugehörigen flexiblen Rohstoffleitungen 4, 4' und deren Auslässen 5, 5' beschickt werden kann. In einem Fall können die beiden Versorgungseinheiten identisch sein und als redundante Systeme dienen. So kann beispielsweise ohne Zeitverlust ein aufgebrauchtes Rohstoffreservoir 8 durch ein voll befülltes Rohstoffreservoir 8' ersetzt werden und die Anlage 1 kann den Extruder 2 ohne Unterbrechung fortlaufend beschicken. Gleichwohl können die beiden Versorgungseinheiten zwar im Wesentlichen baugleich sein, aber dennoch unterschiedliche Rohstoffe 6a, 6b, 6c, 6d, 6e und 6f bzw. 6a', 6b', 6c', 6d', 6e' und 6f' zur Beschickung des Extruders 2 befördern. In einer nicht gezeigten Ausführungsform kann die Anzahl der Rohstoffleitungen 4 und 4' für jede Fördereinrichtung 3, 3' auch unterschiedlich sein. Die Anlage 1 zur Beschickung des Extruders 2 ist jedoch stets in Betrieb wenn der Extruder 2 in Betrieb ist. Die Fördereinrichtungen 3 bzw. 3' sind je nachdem, ob diese in der Förderposition F sind, entweder aktiv oder inaktiv. Ferner weisen die Rohstoffleitungen 4 und 4' eine in Fig. 1 und Fig. 2 nicht dargestellte Absperrvorrichtung 12 auf, mit Hilfe der der Rohstofffluss in der entsprechenden Rohstoffleitung 4, 4' unterbunden oder zugelassen werden kann. Die Anlage 1 zum Beschicken eines Extruders 2 wird in dem in Fig. 1 dargestellten Ausführungsbeispiel über eine Regelung 13 geregelt. Diese regelt in Abhängigkeit der Position der Auslassplatten 10 bzw. 10' das Zusammenspiel der Rohstoffwaage 11, des Mischbehälters 7 und des Extruders 2. Hierfür sind in der Regelung Daten hinterlegt, die für jede bereitgestellte Rohstoffrezeptur festlegen, bei welchem kritischen Gewicht die Rohstoffwaage 11 den Rohstoff in den Mischbehälter 7 kippt. Ferner können Drehzahlen des Mischbehälters 7 sowie Betriebsparameter des Extruders in der Regelung hinterlegt sein. Beim Umschalten von einer ersten Rohstoffrezeptur in eine andere Rohstoffrezeptur registriert also die Regelung 13 zunächst eine Positionsänderung einer Auslassplatte 10, 10' bzw. die Anwesenheit einer anderen Auslassplatte 10, 10' in der Förderposition, beispielsweise durch einen RFID Chip. Daraufhin werden dem Mischbehälter 7 und/oder dem Extruder die für die neue Rohstoffrezeptur hinterlegten Betriebsparameter zugespielt. Gegebenenfalls kann die Regelung 13 auch auf die Absperrvorrichtungen 12 zugreifen. In diesem Fall kann die Regelung 13 die Aktivierung der neu in die Füllposition F gebrachten Fördereinrichtung 3 bzw. 3' zurückhalten, also die Absperrvorrichtung 12 bzw. 12' aktiviert lassen, bis der Mischbehälter 7 auf ein bestimmtes Maß leergelaufen ist. Dies wird mittels eines Füllstandsensors 14 im Mischbehälter 7 erfasst. So wird gewährleistet, dass das im Mischbehälter vorhandene Übergangsgemisch auf ein Mindestmaß reduziert wird.

Unabhängig davon, wie die oben genannten einzelnen Komponenten ausgeführt sind, wird der Extruder 2 stets von genau einer Fördereinrichtung 3 oder 3' über deren zugeordneten flexiblen Rohstoffleitungen 4 oder 4' und den jeweiligen Auslässen 5 oder 5' beschickt. Die aktive Fördereinrichtung 3 oder 3' befindet sich im aktiven Zustand in einer Förderposition F, die im gezeigten Fall oberhalb des Mischbehälters 7 angeordnet ist. In der in Fig. 1 gezeigten Darstellung ist demnach die Fördereinrichtung 3 aktiv. Die Auslässe 5' der weiteren Fördereinrichtung 3' befinden sich in der gezeigten Darstellung in einer Position außerhalb der Förderposition F. Demnach ist die dazugehörige Fördereinrichtung 3' inaktiv. Die Rohstoffleitungen 4 und 4' beider Fördereinrichtungen 3 und 3' münden an ihren Auslässen 5 und 5' in eine eigene Auslassplatte 10 bzw. 10', welche auf einer Verschiebevorrichtung 9 verschiebbar angebracht sind. Ferner ist in Fig. 1 eine Rohstoffwaage 11 abgebildet, die dem Mischbehälter 7 vorgeschaltet ist. Die Rohstoffwaage 11 wird demnach zunächst von der aktiven Fördereinrichtung 3 beladen. Erst beim Erreichen eines vorbestimmten Gesamtgewichts der auf der Rohstoffwaage akkumulierten Rohstoffe 6a, 6b, 6c und 6d kippt die Rohstoffwaage 11 die Rohstoffe in den Mischbehälter 7, wo die Rohstoffe 6a, 6b, 6c, 6d, 6e und 6f zu einer Mischung vermischt und anschließend dem Extruder zugeführt werden.

In Fig. 2 wird der genauere Beschickungsvorgang zum Beschicken des Extruders 2 anhand einer perspektivischen Zeichnung dargestellt. Es ist gezeigt, dass die Auslässe 5 der ersten Fördereinrichtung 3 in Förderposition F sind und die erste Fördereinrichtung 3 über flexible Rohstoffleitungen 4 mit den Auslässen 5 Rohstoffe 6a, 6b, 6c, 6d, 6e und 6f zunächst auf die Rohstoffwaage 11 fördert, welche anschließend nach Erreichen eines vorbestimmten Rohstoffgewichts die auf der Rohstoffwaage 11 vorhandenen Rohstoffe 6a, 6b, 6c, 6d, 6e und 6f in den Mischbehälter 7 kippt. In der gezeigten Ausführungsform sind die Auslässe 5 der Fördereinrichtung 3 auf einer gemeinsamen Auslassplatte 10 angeordnet. In Fig. 2 ist die Anlage 1 in einem eingeschalteten Betriebszustand, d.h. die Fördereinrichtung 3 ist in Betrieb. Die Auslässe 5' der weiteren Fördereinrichtung 3' sowie die Auslassplatte 10' der weiteren Fördereinrichtung 3' sind dabei in einer Position außerhalb der Förderposition F. Demnach ist die weitere Fördereinrichtung 3' nicht aktiv und fördert keine Rohstoffe. Die weitere Fördereinrichtung 3' wird erst dann aktiv, wenn die Auslässe 5' der Fördereinrichtung 3' in die Förderposition F gelangen. In der gezeigten Ausführungsform wird das erreicht, wenn die Auslassplatte 10' der weiteren Fördereinrichtung 3' über die Verschiebevorrichtung 9 in die Förderposition F gelangen und dabei die Auslassplatte 10 und damit die Auslässe 5 der ersten Fördereinrichtung 3 aus der Förderposition F verschieben. Dieser Vorgang kann wechselweise und wiederholend erfolgen.

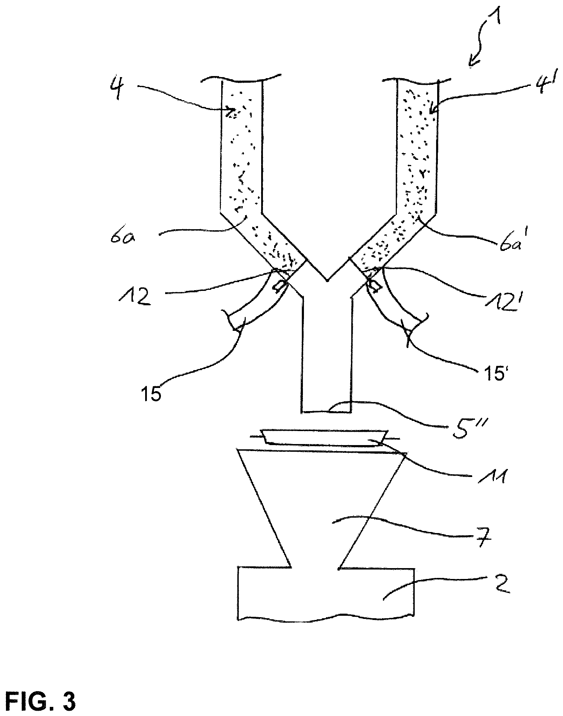

Gemäß Fig. 3 können einzelne oder alle Rohstoffleitungen 4, 4' einem gemeinsamen Auslass 5" zugeführt werden. In diesem Fall wird die Rohstoffzufuhr über die Absperrvorrichtungen 12 bzw. 12' geregelt. Die Unterteilung in zwei unabhängige Fördereinrichtungen 3, 3' bleibt dabei bestehen. In dem gezeigten Ausführungsbeispiel sind pro Fördereinrichtung 3 und 3' je ein Rohstoff 6a und 6a' in einen gemeinsamen Auslass 5" zusammengefasst. Die Absperrvorrichtungen 12 und 12' sind stromabwärts der Zusammenführung angeordnet, um eine separate Absperrung der einzelnen Rohstoffleitungen zu ermöglichen. Gemäß Fig. 3 weist ferner jede Rohstoffleitung 4, 4' eine separate Ablassleitung 15, 15' auf. Dies ist notwendig, um die Rohstoffleitung 4 oder 4', die gerade inaktiv ist, reinigen zu können und alle Rohstoffe 6a oder 6a' aus der inaktiven Rohstoffleitung 4 oder 4' entfernen zu können. So kann insbesondere die inaktive Rohstoffleitung 4 oder 4' mit einer neuen Rohstoffrezeptur beladen werden, während die andere Rohstoffleitung 4 oder 4' gerade aktiv ist. Es ist dabei offensichtlich, dass auch alle Rohstoffleitungen 4 oder 4', die einer Fördereinrichtung 3 oder 3' zugeordnet sind, bereits stromabwärts einer Absperrvorrichtung 12 oder 12' zusammengeführt werden können.

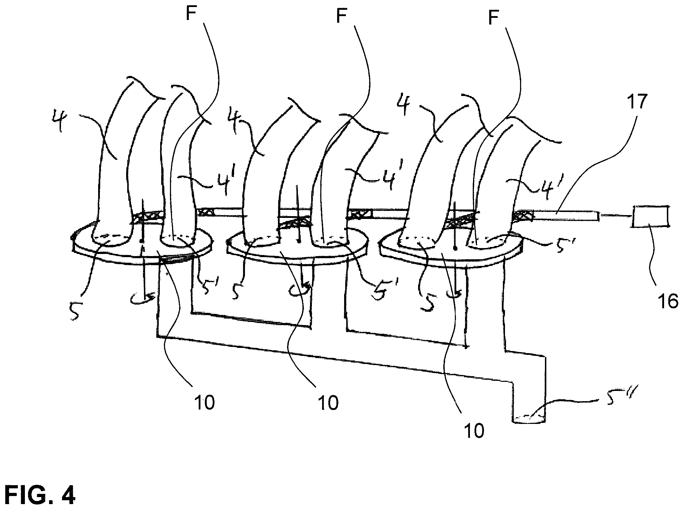

In Fig. 4 ist eine weitere Ausführungsform der Anlage 1 gezeigt. Hierbei sind jeweils zwei Rohstoffleitungen auf einer gemeinsamen Auslassplatte 10 zusammengefasst, wobei in jede Auslassplatte 10 jeweils eine Rohstoffleitung 4 einer ersten Rohstoffrezeptur und eine weitere Rohstoffleitung 4' einer weiteren Rohstoffrezeptur mündet. Über einen Aktuator 16, beispielsweise ein Hydraulikzylinder oder ein Stellmotor, kann die Auslassplatte 10 mittels eines Übertragungsmechanismus 17 derart rotiert werden, dass die Auslassplatte eine Rohstoffleitung 4 aus der Förderposition F heraus und eine andere Rohstoffleitung 4' in die Förderposition F hineinrotiert. Dies wird gemäß Fig. 4 seriell für mehrere Rohstoffleitungen 4 bzw. 4' realisiert. Der Übertragungsmechanismus 17 ist derart ausgebildet, dass eine Betätigung des Aktuators 15 alle Auslassplatten 10 gleichermaßen rotiert. Die jeweils aktivierten Fördereinrichtungen 3, 3', also jene, deren Auslässe 5, 5' sich in der Förderposition F befinden, fördern dann Rohstoffe in den gemeinsamen Auslass 5", wo diese der Rohstoffwaage 11 und dem Mischbehälter 7 zugeführt werden.

### BEZUGSZEICHENLISTE

- 1: Anlage
- 2: Extruder
- 3, 3': Fördereinrichtung
- 4, 4': Rohstoffleitung
- 5, 5', 5": Auslass
- 6a, bis 6f, 6a' bis 6f': Rohstoffe
- 7: Mischbehälter
- 8, 8': Rohstoffreservoir
- 9: Verschiebevorrichtung
- 10: Auslassplatte
- 11: Rohstoffwippe
- 12: Absperrvorrichtung
- 13: Regelung
- 14: Füllstandsensor
- 15: Ablassleitung
- 16: Aktuator
- 17: Übertragungsmechanismus
- F: Förderposition

## Patentansprüche

1. Anlage (1) zum Beschicken eines Extruders (2), umfassend
eine erste Fördereinrichtung (3) und mindestens eine weitere Fördereinrichtung (3'), die jeweils zum Fördern von Rohstoffen (6a, 6b, 6c, 6d, 6e, 6f, 6a', 6b', 6c', 6d', 6e', 6f') in einen dem Extruder (2) vorgeschalteten Mischbehälter (7) zumindest abschnittsweise flexible Rohstoffleitungen (4, 4') mit Auslässen (5, 5') ausbilden,
wobei jede Fördereinrichtung (3, 3') ausgestaltet ist, den Mischbehälter (7) mit einer spezifischen Rohstoffkombination zu beschicken, wobei die Auslässe (5, 5') der Fördereinrichtungen (3, 3') derart in eine Förderposition (F) verschiebbar sind, dass stets genau eine Fördereinrichtung (3, 3') den Mischbehälter (7) mit Rohstoffen (6a, 6b, 6c, 6d, 6e, 6f, 6a', 6b', 6c', 6d', 6e', 6f') beschicken kann, **dadurch gekennzeichnet, dass** die Auslässe (5, 5') der Fördereinrichtungen (3, 3') auf einer gemeinsamen Verschiebevorrichtung (9) angeordnet sind.

2. Anlage (1) nach Anspruch 1,
**dadurch gekennzeichnet, dass**
jede Fördereinrichtung (3, 3') die zu fördernden Rohstoffe (6a, 6b, 6c, 6d, 6e, 6f, 6a', 6b', 6c', 6d', 6e', 6f') aus einem eigenen Rohstoffreservoir (8, 8') bezieht.

3. Anlage (1) nach einem der vorherigen Ansprüche,
**dadurch gekennzeichnet, dass**
jede Fördereinrichtung (3, 3') eine Mehrzahl von Rohstoffleitungen (4, 4'), vorzugsweise vier oder sechs Rohstoffleitungen (4, 4') aufweist, denen jeweils ein Rohstoff (6a, 6b, 6c, 6d, 6e, 6f, 6a', 6b', 6c', 6d', 6e', 6f') zugeordnet ist.

4. Anlage (1) nach einem der vorherigen Ansprüche,
**dadurch gekennzeichnet, dass**
die Auslässe (5, 5') einer Fördereinrichtung (3, 3') auf einer Auslassplatte (10, 10') gebündelt werden.

5. Anlage (1) nach einem der vorherigen Ansprüche,
**dadurch gekennzeichnet, dass**
die Auslassplatten (10, 10') der Fördereinrichtungen (3, 3') im Wesentlichen identisch sind.

6. Anlage (1) nach einem der vorherigen Ansprüche,
**dadurch gekennzeichnet, dass**
die Anlage (1) eine zusätzliche Steuer- oder Regelvorrichtung aufweist, die stromaufwärts des Mischbehälters (7) angeordnet ist.

7. Anlage (1) nach Anspruch 6,
**dadurch gekennzeichnet, dass**
die Steuer- oder Regelvorrichtung mindestens eine Rohstoffwaage (11) mit einer Kippfunktion umfasst, wobei die Rohstoffwaage (11) nach Beladung mit einer vorbestimmten Masse an Rohstoffen (6a, 6b, 6c, 6d, 6e, 6f, 6a', 6b', 6c', 6d', 6e', 6f') diese in den Mischbehälter (7) kippt.

8. Anlage (1) nach einem der vorherigen Ansprüche,
**dadurch gekennzeichnet, dass**
die Fördereinrichtungen (3, 3') pneumatisch betrieben werden.

9. Anlage (1) nach einem der vorherigen Ansprüche,
**dadurch gekennzeichnet, dass**
eine Fördereinrichtung (3, 3') mindestens eine Absperrvorrichtung (12, 12') aufweist, die konfiguriert ist, einen Rohstofffluss durch die Auslässe (5, 5') der zugeordneten Fördereinrichtung (3, 3') zuzulassen oder zu unterbinden.

10. Anlage (1) nach Anspruch 9,
**dadurch gekennzeichnet, dass**
die Anlage eine Regelung (13) aufweist, die konfiguriert ist, einen oder mehrere der Komponenten Rohstoffwaage (11), Absperrvorrichtung (12), Mischbehälter (7), Extruder (2) in Abhängigkeit der aktiven Fördereinrichtung (3, 3') zu regeln.

11. Anlage (1) nach Anspruch 10,
**dadurch gekennzeichnet, dass**
die Regelung (13) ein Bedienfeld aufweist, das die Zustände der vorhandenen Fördereinrichtungen (3, 3') abbildet und/oder Eingeben von Betriebsparametern und Stellgrößen zum Regel der Anlage erlaubt.

12. Verfahren zum Betrieb einer Anlage (1) nach einem der vorherigen Ansprüche, umfassend die Schritte.
- Positionieren von Auslässen (5, 5') einer ersten Fördereinrichtung (3) in einer Förderposition (F);
- Aktivieren der ersten Fördereinrichtung (3), deren Auslässe (5) sich in der Förderposition (F) befinden;
- Deaktivieren der ersten Fördereinrichtung (3);
- Gemeinsames Verschieben der Auslässe (5) der ersten Fördereinrichtung (3) aus der Förderposition (F) und der Auslässe (5') einer weiteren Fördereinrichtung (3') in die Förderposition (F); und
- Aktivieren der weiteren Fördereinrichtung (3').

13. Verfahren nach Anspruch 12,
**dadurch gekennzeichnet, dass**
das Deaktivieren der ersten und/oder der weiteren Fördereinrichtung (3, 3') automatisch mit dem Verschieben der jeweils zugeordneten Auslässe (5, 5') aus der Förderposition (F) und/oder durch das Aktivieren einer Absperrvorrichtung (12, 12') erfolgt.

14. Verfahren nach Anspruch 12 oder 13,
**dadurch gekennzeichnet, dass**
das Aktivieren der ersten und/oder der weiteren Fördereinrichtung (3, 3') automatisch mit dem Verschieben der jeweils zugeordneten Auslässe (5, 5') in die Förderposition (F) und/oder durch das Deaktivieren einer Absperrvorrichtung (12, 12') erfolgt.

15. Verfahren nach einem der Ansprüche 12 bis 14,
ferner umfassend die Schritte:
- Fördern von Rohstoffen (6a, 6b, 6c, 6d, 6e, 6f, 6a', 6b', 6c', 6d', 6e', 6f') auf mindestens eine Rohstoffwaage (11) nach dem Aktivieren einer Fördereinrichtung (3, 3');
- Beladen der Rohstoffwaage (11) mit Rohstoffen (6a, 6b, 6c, 6d, 6e, 6f, 6a', 6b', 6c', 6d', 6e', 6f');
- Kippen der auf der Rohstoffwaage (11) befindlichen Rohstoffe (6a, 6b, 6c, 6d, 6e, 6f, 6a', 6b', 6c', 6d', 6e', 6f') von der mindestens einen Rohstoffwaage (11) in einen Mischbehälter (7), sobald ein kritisches Rohstoffgewicht erreicht ist;
- Zurückschwenken der mindestens einen Rohstoffwaage (11) in die Ausgangsposition zum erneuten Beladen mit Rohstoffen (6a, 6b, 6c, 6d, 6e, 6f, 6a', 6b', 6c', 6d', 6e', 6f').

## Claims

1. Plant (1) for feeding an extruder (2), comprising
a first conveying device (3) and at least one further conveying device (3') which each form at least partially flexible raw material lines (4, 4') with outlets (5, 5') for conveying raw materials (6a, 6b, 6c, 6d, 6e, 6f, 6a', 6b', 6c', 6d', 6e', 6f) into a mixing container (7) connected upstream of the extruder (2),
wherein each conveying device (3, 3') is designed to feed the mixing container (7) with a specific raw material combination,
wherein the outlets (5, 5') of the conveying devices (3, 3') are displaceable into a conveying position (F) in such a way that exactly one conveying device (3, 3') can always feed the mixing container (7) with raw materials (6a, 6b, 6c, 6d, 6e, 6f, 6a', 6b', 6c', 6d', 6e', 6f'),
**characterised in that**
the outlets (5, 5') of the conveying devices (3, 3') are arranged on a common displacement device (9).

2. Plant (1) according to claim 1,
**characterised in that**
each conveying device (3, 3') obtains the raw materials (6a, 6b, 6c, 6d, 6e, 6f, 6a', 6b', 6c', 6d', 6e', 6f') to be conveyed from its own raw material reservoir (8, 8').

3. Plant (1) according to any one of the preceding claims,
**characterised in that**
each conveying device (3, 3') has a plurality of raw material lines (4, 4'), preferably four or six raw material lines (4, 4'), each of which is assigned a raw material (6a, 6b, 6c, 6d, 6e, 6f, 6a', 6b', 6c', 6d', 6e', 6f').

4. Plant (1) according to any one of the preceding claims,
**characterised in that**
the outlets (5, 5') of a conveying device (3, 3') are bundled on an outlet plate (10, 10').

5. Plant (1) according to any one of the preceding claims,
**characterised in that**
the outlet plates (10, 10') of the conveying devices (3, 3') are substantially identical.

6. Plant (1) according to any one of the preceding claims,
**characterised in that**
the plant (1) has an additional control or regulating device which is arranged upstream of the mixing container (7).

7. Plant (1) according to claim 6,
**characterised in that**
the control or regulating device comprises at least one raw material scale (11) with a tilting function, wherein the raw material scale (11) after loading with a predetermined mass of raw materials (6a, 6b, 6c, 6d, 6e, 6f, 6a', 6b', 6c', 6d', 6e', 6f) tilts these into the mixing container (7).

8. Plant (1) according to any one of the preceding claims,
**characterised in that**
the conveying devices (3, 3') are pneumatically operated.

9. Plant (1) according to any one of the preceding claims,
**characterised in that**
a conveying device (3, 3') has at least one shut-off device (12, 12') which is configured to permit or prevent a raw material flow through the outlets (5, 5') of the associated conveying device (3, 3').

10. Plant (1) according to claim 9,
**characterised in that**
the plant has a controller (13) which is configured to control one or more of the components raw material scale (11), shut-off device (12), mixing container (7), extruder (2) as a function of the active conveying device (3, 3').

11. Plant (1) according to claim 10,
**characterised in that**
the controller (13) has a control panel which maps the states of the existing conveying devices (3, 3') and/or allows the input of operating parameters and actuating variables for controlling the system.

12. Method for operating a plant (1) according to one of the preceding claims, comprising the steps:
- Positioning outlets (5, 5') of a first conveying device (3) in a conveying position (F);
- Activating the first conveying device (3) whose outlets (5, 5') are in the conveying position (F);
- Deactivating the first conveying device (3);
- Jointly displacing the outlets (5) of the first conveying device (3) from the conveying position (F) and displacing the outlets (5') of a further conveying device (3') into the conveying position (F); and
- Activating the further conveying device (3').

13. Method according to claim 12,
**characterised in that**
the deactivating of the first and/or the further conveying device (3, 3') takes place automatically with the displacement of the respectively associated outlets (5, 5') from the conveying position (F) and/or by the activation of a shut-off device (12, 12').

14. Method according to claim 12 or 13,
**characterised in that**
the activating of the first and/or the further conveying device (3, 3') takes place automatically with the displacement of the respectively associated outlets (5, 5') into the conveying position (F) and/or by the deactivation of a shut-off device (12, 12').

15. Method according to any one of claims 12 to 14,
further comprising the steps:
- Conveying raw materials (6a, 6b, 6c, 6d, 6e, 6f, 6a', 6b', 6c', 6d', 6e', 6f') onto at least one raw material scale (11) after activation of a conveying device (3, 3');
- Loading the raw material scale (11) with raw materials (6a, 6b, 6c, 6d, 6e, 6f, 6a', 6b', 6c', 6d', 6e', 6f);
- Tilting the raw materials (6a, 6b, 6c, 6d, 6e, 6f, 6a', 6b', 6c', 6d', 6e', 6f) on the raw material scale (11) from the at least one raw material scale (11) into a mixing container (7) as soon as a critical raw material weight is reached;
- Swinging back the at least one raw material scale (11) to the starting position for reloading with raw materials (6a, 6b, 6c, 6d, 6e, 6f, 6a', 6b', 6c', 6d', 6e', 6f').

## Revendications

1. Installation (1) de chargement d'une extrudeuse (2), comprenant
un premier organe de convoyage (3) et au moins un autre organe de convoyage (3') qui comportent des conduits (4, 4') à matière première, lesdits conduits étant souple au moins sur des tronçons, étant destinés à convoyer respectivement des matières premières (6a, 6b, 6c, 6d, 6e, 6f, 6a', 6b', 6c', 6d', 6e', 6f') à un réservoir de mélange (7) disposé en amont de ladite extrudeuse (2), et comportant des sorties (5, 5'),
chaque organe de convoyage (3, 3') étant configuré pour charger ledit réservoir de mélange (7) d'une combinaison spécifique de matières premières,
lesdites sorties (5, 5') des organes de convoyage (3, 3') étant apte à être déplacées à une position de convoyage (F) de façon que toujours juste un seul organe de convoyage (3,3') est capable de charger ledit réservoir de mélange (7) de matières premières (6a, 6b, 6c, 6d, 6e, 6f, 6a', 6b', 6c', 6d', 6e', 6f),
**caractérisée en ce que**
lesdites sorties (5, 5') des organes de convoyage (3,3') sont disposées sur un dispositif commun de déplacement (9).

2. Installation (1) selon la revendication 1,
**caractérisée en ce que**
chaque organe de convoyage (3, 3') reçoit depuis son propre réservoir de matière première (8, 8') les matières premières (6a, 6b, 6c, 6d, 6e, 6f, 6a', 6b', 6c', 6d', 6e', 6f) à convoyer.

3. Installation (1) selon l'une quelconque des revendications précédentes,
**caractérisée en ce que**
chaque organe de convoyage (3, 3') comprend une pluralité de conduits (4, 4') à matière première, de préférence quatre ou six conduits (4, 4') à matière première qui sont attribués respectivement à une matière première (6a, 6b, 6c, 6d, 6e, 6f, 6a', 6b', 6c', 6d', 6e', 6f').

4. Installation (1) selon l'une quelconque des revendications précédentes,
**caractérisée en ce que**
lesdites sorties (5, 5') d'un organe de convoyage (3,3') sont disposées en faisceau sur une plaque de sortie (10, 10').

5. Installation (1) selon l'une quelconque des revendications précédentes,
**caractérisée en ce que**
lesdites plaques de sortie (10, 10') des organes de convoyage (3,3') sont sensiblement identiques.

6. Installation (1) selon l'une quelconque des revendications précédentes,
**caractérisée en ce que**
ladite installation (1) comprend un dispositif additionnel de contrôle ou de réglage qui est disposé en amont dudit réservoir de mélange (7).

7. Installation (1) selon la revendication 6,
**caractérisée en ce que**
ledit dispositif de contrôle ou de réglage comprend au moins une balance (11) de matières premières munie d'une fonction de basculement, ladite balance (11) de matières premières étant destinée, après avoir été chargée d'une masse prédéterminée de matières premières (6a, 6b, 6c, 6d, 6e, 6f, 6a', 6b', 6c', 6d', 6e', 6f'), à décharger ces dernières en basculant.

8. Installation (1) selon l'une quelconque des revendications précédentes,
**caractérisée en ce que**
lesdits organes de convoyage (3,3') sont du type à entraînement pneumatique.

9. Installation (1) selon l'une quelconque des revendications précédentes,
**caractérisée en ce que**
un organe de convoyage (3,3') comprend au moins un dispositif d'obturation (12, 12') configuré pour permettre ou empêcher un écoulement de matières premières à travers des sorties (5, 5') de l'organe de convoyage (3,3') attribué.

10. Installation (1) selon la revendication 9,
**caractérisée en ce que**
ladite installation comprend un réglage (13) configuré pour régler, en fonction de l'organe de convoyage (3,3') actif, un ou plusieurs des composants suivants : balance (11) de matières premières, dispositif d'obturation (12), réservoir de mélange (7), et extrudeuse (2).

11. Installation (1) selon la revendication 10,
**caractérisée en ce que**
ledit réglage (13) comprend un panneau de commande qui est destiné à afficher l'état actuel des organes de convoyage (3,3') existants et/ou qui permet d'entrer des paramètres opérationnels et des valeurs de réglage pour le réglage de l'installation.

12. Procédé d'opération d'une installation (1) selon l'une quelconque des revendications précédentes, comprenant les étapes consistant à :
positionner les sorties (5, 5') d'un premier organe de convoyage (3) dans une position de convoyage (F) ;
activer ledit premier organe de convoyage (3) dont les sorties (5, 5') sont situées dans la position de convoyage (F) ;
désactiver ledit premier organe de convoyage (3) ;
déplacer conjointement les sorties (5) dudit premier organe de convoyage (3) pour les faire sortir de la position de convoyage (F) et les sorties (5') d'un autre organe de convoyage (3') pour les faire entrer à la position de convoyage (F) ; et
activer ledit autre organe de convoyage (3').

13. Procédé selon la revendication 12,
**caractérisé en ce que**
ladite désactivation dudit premier et/ou dudit autre organe de convoyage (3. 3') s'effectue automatiquement lorsque lesdites sorties (5, 5') respectivement attribuées sont déplacés pour les faire sortir de la position de convoyage (F) et/ou lorsqu'un dispositif d'obturation (12, 12') est activé.

14. Procédé selon la revendication 12 ou 13,
**caractérisé en ce que**
ladite activation dudit premier et/ou dudit autre organe de convoyage (3. 3') s'effectue automatiquement lorsque lesdites sorties (5, 5') respectivement attribuées sont déplacés pour les faire entrer à la position de convoyage (F) et/ou lorsqu'un dispositif d'obturation (12, 12') est désactivé.

15. Procédé selon l'une quelconque des revendications 12 à 14, comprenant en outre les étapes consistant à :
convoyer des matières premières (6a, 6b, 6c, 6d, 6e, 6f, 6a', 6b', 6c', 6d', 6e', 6f) sur au moins une balance (11) de matières premières après l'activation d'un organe de convoyage (3, 3') ;
charger de matières premières (6a, 6b, 6c, 6d, 6e, 6f, 6a', 6b', 6c', 6d', 6e', 6f') ladite balance (11) de matières premières ;
décharger, de manière basculante, les matières premières (6a, 6b, 6c, 6d, 6e, 6f, 6a', 6b', 6c', 6d', 6e', 6f) situées sur ladite balance (11) de matières premières depuis ladite balance (11) de matières premières à un réservoir de mélange (7) lorsqu' un poids critique des matières premières est atteint ;
retourner, de manière basculante, ladite au moins une balance (11) de matières premières à une position de départ pour réaliser de nouveau un chargement de matières premières (6a, 6b, 6c, 6d, 6e, 6f, 6a', 6b', 6c', 6d', 6e', 6f).
